# EUROPEAN PATENT APPLICATION

(11) **EP 2 720 206 A1**
(43) Date of publication of application: **16.04.2014**
(21) Application number: 12796167.0
(22) Date of filing: 08.06.2012
(51) Int. Cl.: G07F 15/08, G06Q 30/04, G06Q 50/10, G07B 15/00

(54) **ACCOUNTING SYSTEM, USAGE FEE CALCULATION DEVICE, CONTROL METHOD, AND PROGRAM**

(30) Priority: 10.06.2011 JP 2011130144
(71) Applicant: Mitsubishi Heavy Industries, Ltd., Tokyo 108-8215 (JP)
(72) Inventor: SHIBATA Yutaka, Tokyo 108-8215 (JP); HASEGAWA Rie, Tokyo 108-8215 (JP); ADACHI Tetsuya, Tokyo 108-8215 (JP); HATTORI Kaito, Tokyo 108-8215 (JP)
(74) Representative: Henkel, Breuer & Partner
(86) International application number: PCT/JP2012/064842
(87) International publication number: WO 2012/169633

(57) **Abstract**

The present invention comprises wireless communication devices (130), (150) and a usage fee calculation device (110), the usage fee calculation device (110) having: a supply fee calculation unit for multiplying a per-unit-amount energy supply unit price by the difference between a starting-time remaining value for the energy of a vehicle and an end-time remaining value for the energy of the vehicle, to calculate a fee for the amount of energy supplied to the vehicle by supply equipment (C); a time fee calculation unit for multiplying a per-unit-time time price for the usage of a parking lot (P) by the time elapsed between reception of start-time data and reception of end-time data, to calculate the fee for the usage time of the parking lot (P) by the vehicle; and a usage fee calculation unit for calculating the usage fee for the parking lot (P) on the basis of the fee calculated by the supply fee calculation unit and the fee calculated by the time fee calculation unit.

## Description

### [Technical Field]

The present invention relates to an accounting system, a usage fee calculation device, a control method, and a program. In particular, the present invention relates to an accounting system which charges a usage fee to a user of a parking lot and a usage fee calculation device which calculates the usage fee for the parking lot in the parking lot in which a supply facility of energy for a vehicle is provided. In addition, the present invention relates to a control method of controlling the usage fee calculation device and a program for use in the usage fee calculation device.

Priority is claimed on Japanese Patent Application No. 2011-130144, filed June 10, 2011, the content of which is incorporated herein by reference.

### [Background Art]

With the widespread use of electric vehicles, electric charging facilities to charge the electric vehicles are expected to expand. In addition to a dedicated operation form of electric charging in which the electric charging facility such as a gas station is installed, the electric charging facility may be in an operation form in which the electric vehicle can be charged during parking or the like by installing the electric charging facility in a general parking lot.

For example, the electric charging facility using the parking lot may be operated to charge an electric charging fee of the electric vehicle along with a parking fee. Various technologies to implement such an operation are known (for example, see Patent Literature 1).

The technology disclosed in Patent Literature 1 is technology related to a parking lot device configured to issue a parking ticket recording an entering time when the vehicle enters the parking lot and permit the vehicle to leave when the adjustment of the parking fee is completed by causing a fee adjustment machine to read the parking ticket at the time of leaving the parking lot. More specifically, the parking lot device is provided as an electric charging device, which charges a battery of the electric vehicle, and an electric charging information I/O (input/output) device within the parking lot. In the electric charging information I/O device, an electric charging information recording means capable of recording calculation information about a time of battery charging by the electric charging device on the parking ticket is provided. In the fee adjustment machine, an electric charging fee calculation means for calculating an electric charging fee from electric charging information recorded on the parking ticket is provided. A configuration is made to permit the vehicle to leave when the adjustment of the parking fee and the electric charging fee is completed.

### [Citation List]

### [Patent Literature]

### [Patent Literature 1]

Japanese Unexamined Patent Application, First Publication No. 2001-312772 [Summary of Invention]

### [Problem to be Solved by the Invention]

As described above, in Patent Literature 1, technology to charge an electric charging fee of an electric vehicle along with a parking fee in an electric charging facility using the parking lot is disclosed. Thus, in the technology disclosed in Patent Literature 1, it is possible to record start and end times of electric charging as well as times of entering and leaving the parking lot as in a general toll parking lot on the parking ticket. Thereby, it is possible to charge an electric charging fee of an electric vehicle along with a parking fee.

However, in the technology disclosed in Patent Literature 1, it is necessary to significantly upgrade an existing automatic fare adjustment machine to record the start and end times of the electric charging or the like on the parking ticket. In addition, the technology disclosed in Patent Literature 1 is the one which includes botheration such as that a user should hold and handle parking tickets. Further, in the technology disclosed in Patent Literature 1, the parking ticket should be inserted into the automatic fare adjustment machine upon leaving the parking lot after the parking ticket is received from the automatic fare adjustment machine upon entering the parking lot, and a congestion of vehicles is likely to occur around the entry/exit of the parking lot.

### [Means for Solving the Problem]

In order to achieve the aforementioned objects, according to a first aspect of the present invention, an accounting system is provided which charges a usage fee to a user of a parking lot in the parking lot in which an energy supply facility for a vehicle is provided. The accounting system includes a wireless communication device which performs wireless communication with an onboard device of the vehicle and a usage fee calculation device which calculates a usage fee of the parking lot based on data received by the wireless communication device from the onboard device. The usage fee calculation device includes a supply fee calculation section, a time fee calculation section, and a usage fee calculation section. The supply fee calculation section calculates a fee for an amount of energy supply by the supply facility for the vehicle by multiplying a difference between a start time remaining amount value of energy of the vehicle included in start time data received by the wireless communication device from the onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy. The time fee calculation section calculates a fee for a time of the use of the parking lot by the vehicle by multiplying an elapsed time from a reception time of the start time data to a reception time of the end time data by a unit price per unit time for using the parking lot. The usage fee calculation section calculates the usage fee of the parking lot based on the fee calculated by the supply fee calculation section and the fee calculated by the time fee calculation section.

The usage fee calculation device may further include: a remaining amount difference calculation section which calculates a difference between the start time remaining amount value of energy of the vehicle included in the start time data and the entering time remaining amount value of energy of the vehicle included in the end time data, and the supply fee calculation section may calculate a fee for an amount of energy supply for the vehicle by the supply facility according to the difference between the remaining amount values of energy of the vehicle calculated by the remaining amount difference calculation section.

The usage fee calculation device may further include: an elapsed time calculation section which calculates the elapsed time from the reception time of the start time data to the reception time of the end time data, and the time fee calculation device may calculate the fee for the time of the use of the parking lot by the vehicle according to the time calculated by the elapsed time calculation section.

The supply fee calculation section may change the unit price for the supply according to a time division including a time period from the reception time of the start time data to the reception time of the end time data.

The time fee calculation section may change the unit price per time according to a time division including a time period from the reception time of the start time data to the reception time of the end time data.

The accounting system may further include: a restriction device which restricts the vehicle from leaving the parking lot, wherein the usage fee calculation device may further includes: a leaving restriction control section which controls the restriction device to release restriction from leaving imposed on the vehicle by the restriction device when the usage fee calculated by the usage fee calculation section has been adjusted.

The accounting system may further include: a fee settlement device which performs settlement on the usage fee of the parking lot, wherein, when the fee settlement device has performed the settlement on the usage fee of the parking lot and the usage fee calculated by the usage fee calculation section has been adjusted, the leaving restriction control section controls the restriction device to release the restriction from leaving imposed on the vehicle by the restriction device.

When payment information to adjust the usage fee is included in the end time data and the usage fee calculated by the usage fee calculation section has been electronically paid using the payment information, the leaving restriction control section may control the restriction device to release the restriction from leaving imposed on the vehicle by the restriction device.

The usage fee calculation device may further include: an electronic payment section which electronically pays the usage fee calculated by the usage fee calculation section using the payment information when the payment information to adjust the usage fee is included in the end time data. In addition, when the electronic payment section has made electronic payment, the leaving restriction control section may control the restriction device to release the restriction from leaving imposed on the vehicle by the restriction device.

According to a second aspect of the present invention, a usage fee calculation device is provided which calculates a usage fee of a parking lot, including: a supply fee calculation section, a time fee calculation section, and a usage fee calculation section. The supply fee calculation section calculates a fee for an amount of energy supply by a supply facility for a vehicle by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy. The time fee calculation section calculates a fee for a time of the use of the parking lot by the vehicle by multiplying an elapsed time from a reception time of the start time data to a reception time of the end time data by a unit price per unit time for using the parking lot. The usage fee calculation section calculates the usage fee of the parking lot based on the fee calculated by the supply fee calculation section and the fee calculated by the time fee calculation section.

According to a third aspect of the present invention, a control method of controlling a usage fee calculation device is provided which calculates a usage fee of a parking lot, including: a supply fee calculation step, a time fee calculation step, and a usage fee calculation step. In the supply fee calculation step, a fee for an amount of energy supply by a supply facility for a vehicle is calculated by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy. In the time fee calculation step, a fee for a time of the use of the parking lot by the vehicle is calculated by multiplying an elapsed time from a reception time of the start time data to a reception time of the end time data by a unit price per unit time for using the parking lot. In the usage fee calculation step, the usage fee of the parking lot is calculated based on the fee calculated by the supply fee calculation section and the fee calculated by the time fee calculation section.

According to a fourth aspect of the present invention, a program to be used in a usage fee calculation device is provided, which calculates a usage fee of a parking lot, for causing the usage fee calculation device to function as: a supply fee calculation section, a time fee calculation section, and a usage fee calculation section. The supply fee calculation section calculates a fee for an amount of energy supply by a supply facility for a vehicle by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy. The time fee calculation section calculates a fee for the time of use of the parking lot by the vehicle by multiplying an elapsed time from a reception time of the start time data to a reception time of the end time data by a unit price per unit time for using the parking lot. The usage fee calculation section calculates the usage fee of the parking lot based on the fee calculated by the supply fee calculation section and the fee calculated by the time fee calculation section.

The aspects of invention described above do not describe all necessary features of the present invention. A sub-combination of the features may also be the present invention.

### [Effects of the Invention]

As is obvious from the description above, according to the present invention, in an electric charging facility using a parking lot, an operation is possible without significantly upgrading an existing automatic fare adjustment machine to charge an electric charging fee of an electric vehicle along with a parking fee. In addition, according to the present invention, the operation is possible without causing a user to use a parking ticket. Further, the likelihood of a congestion of vehicles occurring around an entry/exit of the parking lot can be significantly reduced.

### [Brief Description of Drawings]

Fig. 1 is a diagram illustrating an example of a usage environment of an accounting system 100 according to an embodiment.
Fig. 2 is a diagram illustrating an example of a block configuration of a usage fee calculation device 110.
Fig. 3 is a diagram illustrating an example of information stored in a start time information storage section 124 in the form of a table.
Fig. 4 is a diagram illustrating an example of information stored in a unit price information storage section 125 in the form of a matrix.
Fig. 5 is a diagram illustrating an example of an operation flow of the usage fee calculation device 110.
Fig. 6 is a diagram illustrating another example of an operation flow of the usage fee calculation device 110.
Fig. 7 is a diagram illustrating an example of a hardware configuration when the usage fee calculation device 110 is configured of an electronic information processing device such as a computer.

### [Description of Embodiments]

Hereinafter, an embodiment of the invention will be described. The embodiment does not limit the invention according to the claims, and all combinations of features described in the embodiment are not necessarily essential as solutions proposed in the invention.

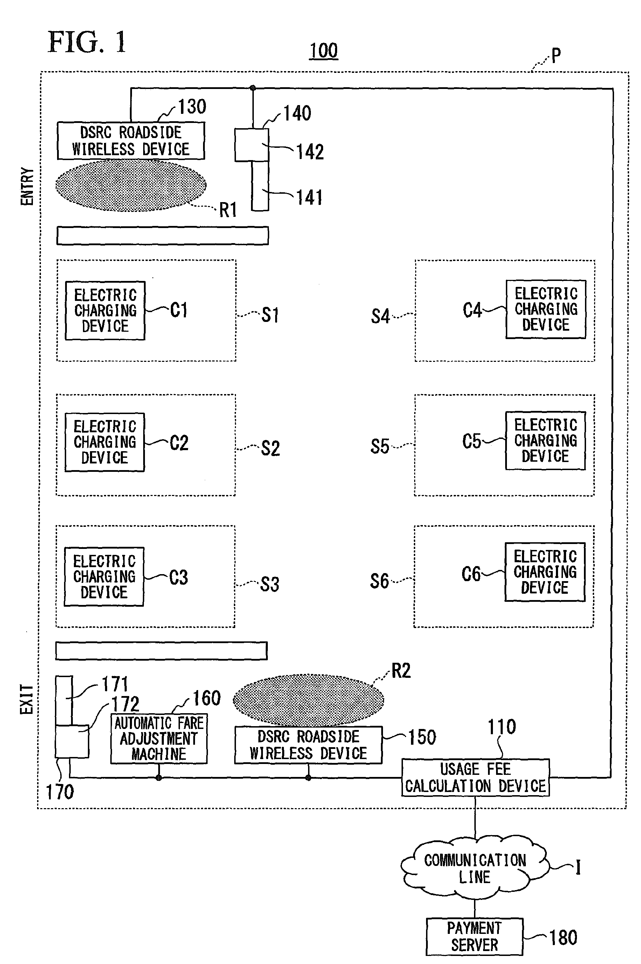

Fig. 1 is a diagram illustrating an example of a usage environment of an accounting system 100 according to the embodiment. The accounting system 100 is a system of charging a usage fee to a user of a parking lot P in the parking lot P in which electric charging devices C1 to C6 (hereinafter referred to as electric charging devices C) for an electric vehicle are provided. The electric charging devices C are installed one by one in parking spaces S1 to S6 (hereinafter referred to as parking spaces S) within the parking lot P. In addition, the electric vehicle may be an example of a "vehicle" in this embodiment. In addition, the electric charging device C may be an example of an "energy supply facility" in this embodiment.

The accounting system 100 includes a usage fee calculation device 110, a dedicated short range communication (DSRC) roadside wireless device 130, a crossing gate 140, a DSRC roadside wireless device 150, an automatic fare adjustment machine 160, a crossing gate 170, and a payment server 180. The usage fee calculation device 110 is electrically connected to each of the DSRC roadside wireless device 130, the crossing gate 140, the DSRC roadside wireless device 150, the automatic fare adjustment machine 160, and the crossing gate 170. In addition, the usage fee calculation device 110 is connected for communication with the payment server 180 via a communication line I. Here, the communication line I includes a computer network such as the Internet, a core network of a communication provider, and various local networks.

In addition, the DSRC roadside wireless devices 130 and 150 may be examples of a "wireless communication device" in the present invention. In addition, the crossing gates 140 and 170 may be examples of a "restriction device" in this embodiment. In addition, the automatic fare adjustment machine 160 may be an example of a "fee settlement device" in this embodiment.

In addition, the electric vehicle using the parking lot P in which the accounting system 100 is used is assumed to include an intelligent transport systems (ITS) onboard device. Here, the ITS onboard device is a wireless device installed on a dashboard or the like of the electric vehicle in order to wirelessly exchange information necessary for payment of a usage fee of the parking lot P and other services of the accounting system 100 with the DSRC roadside wireless device 130 or 150. In addition, the ITS onboard device may be an example of an "onboard device" in this embodiment.

The usage fee calculation device 110 is a device which calculates a usage fee of the parking lot P based on start time data received by the DSRC roadside wireless device 130 from the ITS onboard device and end time data received by the DSRC roadside wireless device 150 from the ITS onboard device. Here, the start time data and the end time data are data including at least an identifier (ID) of the ITS onboard device and a remaining battery amount value of a secondary battery of the electric vehicle. In addition, the end time data also includes information indicating that electronic payment is desired. More specifically, upon receiving the start time data transmitted from the ITS onboard device from the DSRC roadside wireless device 130, the usage fee calculation device 110 controls the crossing gate 150 to release the restriction from entering imposed on the electric vehicle by the crossing gate 140 when there is an empty parking space S. In addition, upon receiving the end time data transmitted from the ITS onboard device from the DSRC roadside wireless device 150, the usage fee calculation device 110 calculates the usage fee of the parking lot P. Then, when no payment information is included in the end time data received from the DSRC roadside wireless device 150, the usage fee calculation device 110 transmits usage fee data indicating a calculated usage fee to the automatic fare adjustment machine 160. Then, upon receiving settlement completion notification data indicating that the adjustment of a usage fee has been completed from the automatic fare adjustment machine 160, the usage fee calculation device 110 controls the crossing gate 170 to release the restriction from leaving imposed on the electric vehicle by the crossing gate 170. In addition, when payment information is included in the end time data received from the DSRC roadside wireless device 150, the usage fee calculation device 110 performs electronic payment with the payment server 180. Then, when the electronic payment is completed, the usage fee calculation device 110 controls the crossing gate 170 to release the restriction from leaving imposed on the electric vehicle by the crossing gate 170. In addition, the remaining battery amount value of the secondary battery may be an example of a "remaining amount value of energy" in this embodiment.

The DSRC roadside wireless device 130 is a device which performs DSRC communication with the ITS onboard device. Here, the DSRC communication is bidirectional wireless communication technology using an industry science medical (ISM) band of 5.8 GHz specifically designated for vehicle communication. More specifically, the DSRC roadside wireless device 130 is provided near the entry of the parking lot P. Then, the DSRC roadside wireless device 130 constantly transmits a signal toward a communication area R1. When the electric vehicle enters the communication area R1, the ITS onboard device mounted on the electric vehicle receives the signal transmitted from the DSRC roadside wireless device 130. Upon receiving the signal transmitted from the DSRC roadside wireless device 130, the ITS onboard device transmits start time data including predetermined information to the DSRC roadside wireless device 130 as information to be transmitted to the DSRC roadside wireless device 130. Upon receiving the start time data transmitted from the ITS onboard device, the DSRC roadside wireless device 130 transmits the start time data to the usage fee calculation device 110.

The crossing gate 140 is a device which restricts the electric vehicle from entering the parking lot P. More specifically, the crossing gate 140 is installed at the entry of the parking lot P. In addition, the crossing gate 140 is configured of a gate bar 141 and a mechanism section 142 which causes the gate bar 141 to move up and down. The mechanism section 142 is controlled from the usage fee calculation device 110 and causes the gate bar 141 to move up and down.

The DSRC roadside wireless device 150 is a device which performs DSRC communication with the ITS onboard device. More specifically, the DSRC roadside wireless device 150 is provided near the exit of the parking lot P. Then, the DSRC roadside wireless device 150 constantly transmits a signal toward a communication area R2. When the electric vehicle enters the communication area R2, the ITS onboard device mounted on the electric vehicle receives a signal transmitted from the DSRC roadside wireless device 150.

Upon receiving a signal transmitted from the DSRC roadside wireless device 150, the ITS onboard device transmits end time data including predetermined information to the DSRC roadside wireless device 150 as information to be transmitted to the DSRC roadside wireless device 150. Upon receiving the end time data transmitted from the ITS onboard device, the DSRC roadside wireless device 150 transmits the end time data to the usage fee calculation device 110.

The automatic fare adjustment machine 160 is a device which performs settlement of the usage fee for the parking lot P. More specifically, at the exit of the parking lot P, the automatic fare adjustment machine 160 is provided inside the parking lot P from the crossing gate 170. Upon receiving the usage fee data indicating the usage fee from the usage fee calculation device 110, the automatic fare adjustment machine 160 awaits payment of an amount of money corresponding to the usage fee indicated by the usage fee data. Then, when the amount of money corresponding to the usage fee is paid, the automatic fare adjustment machine 160 transmits settlement completion notification data indicating that the money has been paid to the usage fee calculation device 110.

The crossing gate 170 is a device which restricts the electric vehicle from leaving the parking lot P. More specifically, the crossing gate 170 is provided at the exit of the parking lot P. In addition, the crossing gate 170 is configured of a gate bar 171 and a mechanism section 172 which causes the gate bar 171 to move up and down. The mechanism section 172 is controlled from the usage fee calculation device 110 and causes the gate bar 171 to move up and down.

The payment server 180 is a server which makes electronic payment. More specifically, upon receiving payment data representing payment information from the usage fee calculation device 110, the payment server 180 performs a payment process using the payment information represented by the payment data. Then, when the payment process is completed, the payment server 180 transmits payment completion notification data indicating that the payment process is completed to the usage fee calculation device 110.

In addition, in this embodiment, for the purpose of preventing the description from becoming complex, a configuration in which the accounting system 100 includes one usage fee calculation device 110 will be described. However, the accounting system 100 may include a plurality of usage fee calculation devices 110.

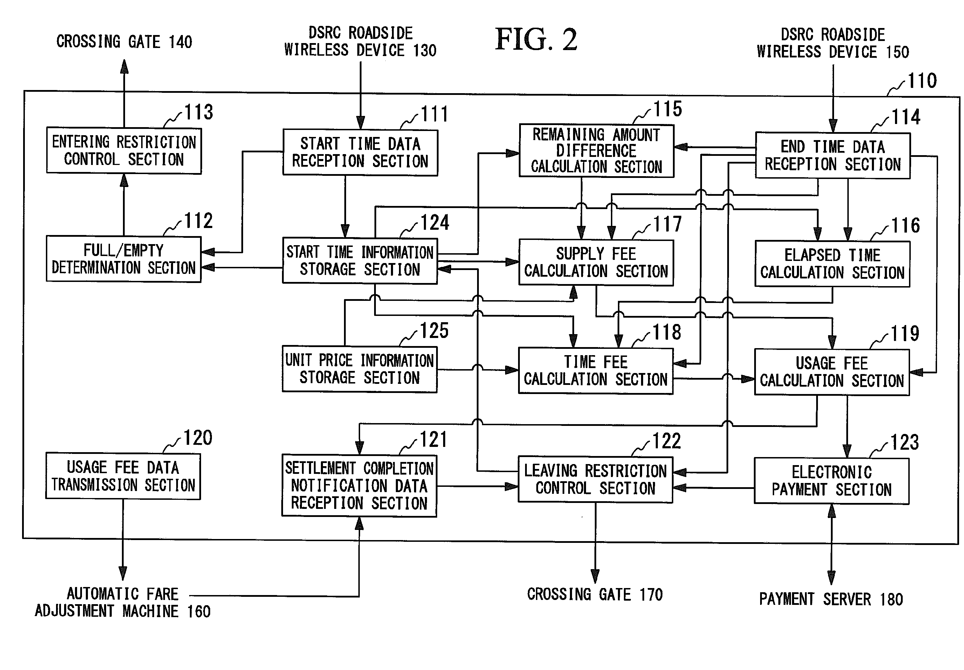

Fig. 2 is a diagram illustrating an example of a block configuration of a usage fee calculation device 110. The usage fee calculation device 110 includes a start time data reception section 111, a full/empty determination section 112, an entering restriction control section 113, an end time data reception section 114, a remaining amount difference calculation section 115, an elapsed time calculation section 116, a supply fee calculation section 117, a time fee calculation section 118, a usage fee calculation section 119, a usage fee data transmission section 120, a settlement completion notification data reception section 121, a leaving restriction control section 122, an electronic payment section 123, a start time information storage section 124, and a unit price information storage section 125. Hereinafter, functions and operations of each of the components will be described.

The start time data reception section 111 receives start time data transmitted from the DSRC roadside wireless device 130.

When the start time data reception section 111 has received start time data, the full/empty determination section 112 determines whether there is an empty parking space S based on information stored in the start time information storage section 124.

When the full/empty determination section 112 has determined that there is an empty parking space S, the entering restriction control section 113 controls the crossing gate 140 to release the restriction from entering imposed on the electric vehicle by the crossing gate 140.

The end time data reception section 114 receives end time data transmitted from the DSRC roadside wireless device 150.

The remaining amount difference calculation section 115 calculates a difference between a remaining battery amount value at the entering time in a secondary battery of the electric vehicle stored in the start time information storage section 124 among information included in the start time data received by the start time data reception section 111 and a remaining battery amount value at the leaving time in the secondary battery of the electric vehicle included in the end time data received by the end time data reception section 114.

The elapsed time calculation section 116 calculates an elapsed time from a reception time of the start time data received by the start time data reception section 111 to a reception time of the end time data received by the end time data reception section 114.

The supply fee calculation section 117 calculates a fee for an amount of electric charge of the electric vehicle by the electric charging device C by multiplying a difference between the entering time remaining battery amount value in the secondary battery of the electric vehicle when the electric vehicle enters the parking lot P and the leaving time remaining battery amount value in the secondary battery of the electric vehicle when the electric vehicle leaves the parking lot P by a unit price for electric charging per unit power amount. The entering time remaining battery amount value is included in the start time data received by the DSRC roadside wireless device 130 from the ITS onboard device of the electric vehicle, and the leaving time remaining battery amount value is included in the end time data received by the DSRC roadside wireless device 150 from the ITS onboard device of the electric vehicle. More specifically, the supply fee calculation section 117 calculates the fee for the amount of electric charge of the electric vehicle by the electric charging device C according to the difference between the remaining battery amount values in the secondary battery of the electric vehicle calculated by the remaining amount difference calculation section 115. More specifically, the supply fee calculation section 117 changes a unit price for electric charging according to a time division including a time period from the reception time of the start time data to the reception time of the end time data. In addition, the unit price for electric charging per unit power amount may be an example of a "unit price for supply per unit amount of energy" in this embodiment. In addition, the amount of electric charge may be an example of an "energy supply amount" in this embodiment.

The time fee calculation section 118 calculates a fee for a time of use of the parking lot P by the electric vehicle by multiplying the elapsed time from the reception time of the start time data received by the start time data reception section 111 to the reception time of the end time data received by the end time data reception section 114 by a unit price per unit time for using the parking lot P. More specifically, the time fee calculation section 118 calculates the fee for the time of the use of the parking lot P by the electric vehicle according to the time calculated by the elapsed time calculation section 116. More specifically, the time fee calculation section 118 changes a unit price per time according to the time division including a time period from the reception time of the start time data to the reception time of the end time data.

The usage fee calculation section 119 calculates the usage fee of the parking lot P based on the fee calculated by the supply fee calculation section 117 and the fee calculated by the time fee calculation section 118.

The usage fee data transmission section 120 transmits data indicating the usage fee calculated by the usage fee calculation section 119 to the automatic fare adjustment machine 160.

The settlement completion notification data reception section 121 receives settlement completion notification data indicating that the adjustment of the usage fee has been completed from the automatic fare adjustment machine 160.

When the usage fee calculated by the usage fee calculation section 118 has been adjusted, the leaving restriction control section 122 controls the crossing gate 170 to release the restriction from leaving imposed on the electric vehicle by the crossing gate 170. More specifically, when the automatic fare adjustment machine 160 has performed settlement on the usage fee for the parking lot P and the usage fee calculated by the usage fee calculation section 119 has been adjusted, the leaving restriction control section 122 controls the crossing gate 170 to release the restriction from leaving imposed on the electric vehicle by the crossing gate 170. More specifically, payment information to adjust the usage fee is included in the end time data. When the usage fee calculated by the usage fee calculation section 119 has been electronically paid using the payment information, the leaving restriction control section 122 controls the crossing gate 170 to release the restriction from leaving imposed on the electric vehicle by the crossing gate 170. More specifically, when the electronic payment section 123 has made electronic payment, the leaving restriction control section 122 controls the crossing gate 170 to release the restriction from leaving imposed on the electric vehicle by the crossing gate 170.

When the payment information to adjust the usage fee is included in the end time data, the electronic payment section 123 electronically pays the usage fee calculated by the usage fee calculation section 119 with the payment server 180 using the payment information.

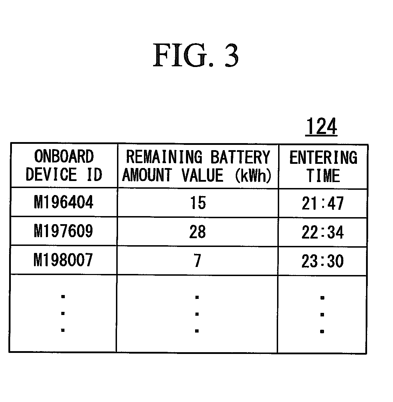

Fig. 3 is a diagram illustrating an example of information stored in the start time information storage section 124 in the form of a table. In the start time information storage section 124, information such as an onboard device ID, a remaining battery amount value (kWh), and an entering time is associated and stored.

The onboard device ID is an identification code allocated device by device in order to identify the ITS onboard device. The remaining battery amount value (kWh) is a remaining battery amount of the secondary battery when the electric vehicle equipped with the ITS onboard device identified by the onboard device ID enters the parking lot P. The entering time is a time at which the electric vehicle equipped with the ITS onboard device identified by the onboard device ID has entered the parking lot P.

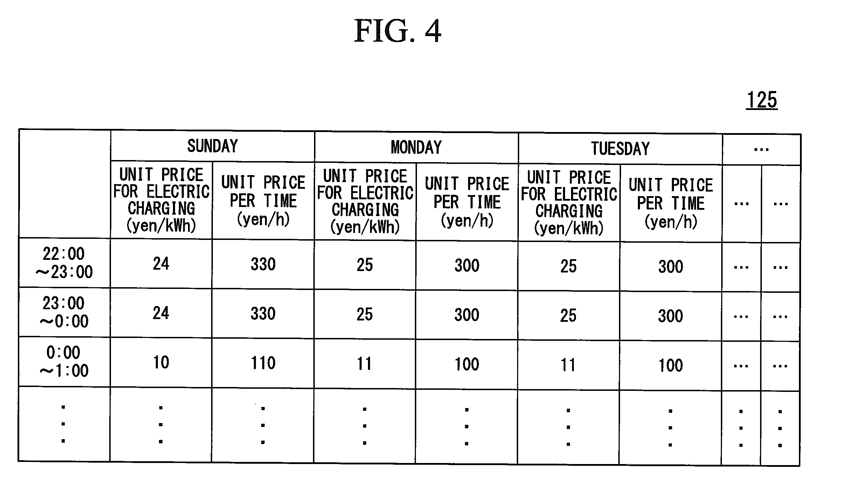

Fig. 4 is a diagram illustrating an example of information stored in the unit price information storage section 125 in the form of a matrix.

In the unit price information storage section 125, information such as a unit price for electric charging (yen/kWh) and a unit price per time (yen/h) is associated and stored for each day of the week and each time slot. In addition, each day of the week and each time slot may be examples of the "time division" in this embodiment.

The unit price for electric charging (yen/kWh) is a unit price for electric charging per unit power amount. The unit price per time (yen/h) is a unit price per unit time for using the parking lot P.

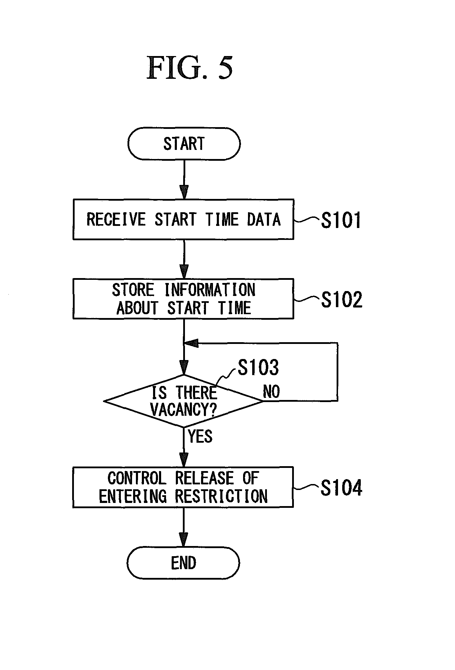

Fig. 5 is a diagram illustrating an example of an operation flow of the usage fee calculation device 110. This operation flow is an operation flow of the usage fee calculation device 110 when the electric vehicle enters the parking lot P.

In the description of this operation flow, Figs. 1 to 4 will be referred to together.

A driver of the electric vehicle enters through the entry of the parking lot P when using the parking lot P in which the electric charging device C is provided. In this case, the electric vehicle passes through the communication area R1 of the DSRC roadside wireless device 130. Then, because the gate bar 141 of the crossing gate 140 moves down, the electric vehicle stops before the gate bar 141. As described above, the DSRC roadside wireless device 130 constantly transmits a signal toward the communication area R1. Upon receiving the signal, the ITS onboard device mounted on the electric vehicle transmits start time data including information such as the onboard device ID of the ITS onboard device and the entering time remaining battery amount value in the secondary battery of the electric vehicle to the DSRC roadside wireless device 130. Upon receiving the start time data transmitted from the ITS onboard device, the DSRC roadside wireless device 130 transmits the start time data to the usage fee calculation device 110.

Upon receiving the start time data transmitted from the DSRC roadside wireless device 130 (S101), the start time data reception section 111 of the usage fee calculation device 110 transmits data indicating that the start time data has been received to the full/empty determination section 112 and associates and stores the information such as the onboard device ID of the ITS onboard device and the entering time remaining battery amount value in the secondary battery of the electric vehicle with information about a reception time at which the start time data has been received in the start time information storage section 124 (S102). Here, the reception time is stored as the entering time in the start time information storage section 124. Thereby, information as illustrated in Fig. 3 is stored in the start time information storage section 124 of the usage fee calculation device 110.

Upon receiving the data indicating that the start time data has been received from the start time data reception section 111, the full/empty determination section 112 of the usage fee calculation device 110 determines whether there is an empty parking space S based on the information stored in the start time information storage section 124 (S103). For example, when the number of combinations of the information stored in the start time information storage section 124 is less than the number of parking spaces S, the full/empty determination section 112 determines that there is an empty parking space S (S103: Yes). On the other hand, when the number of combinations of the information stored in the start time information storage section 124 is the same as the number of parking spaces S, the full/empty determination section 112 determines that there is no empty parking space S (S103: No). Then, the full/empty determination section 112 transmits data indicating the determination result to the entering restriction control section 113.

Upon receiving the data indicating the determination result from the full/empty determination section 112, the entering restriction control section 113 of the usage fee calculation device 110 controls the crossing gate 140 to release the restriction from entering imposed on the electric vehicle by the crossing gate 140 when the determination result indicates that there is a parking space S (S104). Thereby, the electric vehicle can enter the parking lot P. On the other hand, when the determination result indicates that there is no parking space S, the entering restriction control section 113 does not perform release control on the crossing gate 140. Therefore, the crossing gate 140 is in a state in which the gate bar 141 remains down until the parking space S is available. That is, the electric vehicle waits in a state in which the electric vehicle remains stopped before the crossing gate 140 until the parking space S is available.

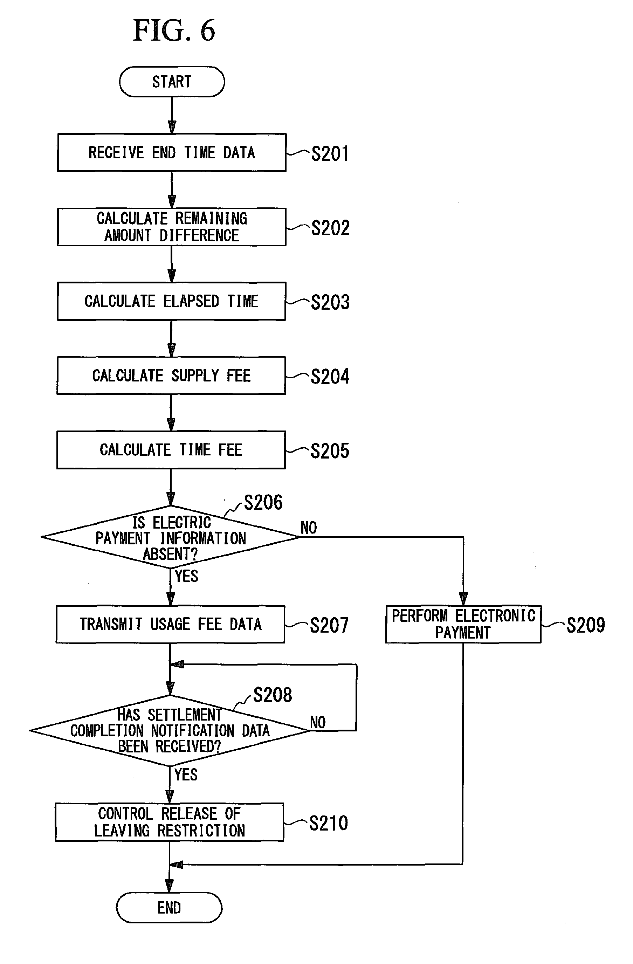

Fig. 6 is a diagram illustrating another example of an operation flow of the usage fee calculation device 110. This operation flow is an operation flow of the usage fee calculation device 110 when the electric vehicle leaves the parking lot P. In the description of the operation flow, FIGS. 1 to 5 will be referred to together.

Upon leaving the parking lot P, the driver of the electric vehicle leaves through the exit of the parking lot P. In this case, the electric vehicle passes through the communication area R2 of the DSRC roadside wireless device 150. Then, because the gate bar 161 of the crossing gate 160 moves down, the electric vehicle stops before the gate bar 161. As described above, the DSRC roadside wireless device 150 constantly transmits a signal toward the communication area R2. Upon receiving the signal, the ITS onboard device mounted on the electric vehicle transmits end time data including at least information such as the onboard device ID of the ITS onboard device and the remaining battery amount value at the entering time in the secondary battery of the electric vehicle to the DSRC roadside wireless device 150.

In addition, when a setting such as that the ITS onboard device electronically pays the usage fee of the parking lot P is set in advance, the ITS onboard device transmits end time data further including information indicating that electronic payment is performed. Upon receiving the end time data transmitted from the ITS onboard device, the DSRC roadside wireless device 150 transmits the end time data to the usage fee calculation device 110. In addition, the information indicating that electronic payment is performed may be an example of "payment information" in this embodiment.

Upon receiving the end time data transmitted from the DSRC roadside wireless device 150 (S201), the end time data reception section 114 of the usage fee calculation device 110 transmits data indicating the onboard device ID of the ITS onboard device and the remaining battery amount value at the end time in the secondary battery of the electric vehicle included in the end time data to the remaining amount difference calculation section 115. In addition, the end time data reception section 114 transmits data indicating a reception time of the end time data and the onboard device ID of the ITS onboard device included in the end time data to the elapsed time calculation section 116, the supply fee calculation section 117, and the time fee calculation section 118. In addition, when the information indicating that the electronic payment is made is included in the end time data, the end time data reception section 114 transmits data indicating the information to the usage fee calculation section 119. In addition, the end time data reception section 114 transmits data indicating the onboard device ID of the onboard device included in the end time data to the leaving restriction control section 122.

Upon receiving the data indicating the onboard device ID of the ITS onboard device and the remaining battery amount value at the end time in the secondary battery of the electric vehicle from the end time data reception section 114, the remaining amount difference calculation section 115 of the usage fee calculation device 110 reads information about the entering time remaining battery amount value stored in association with the onboard ID of the ITS onboard device indicated by data received from the end time data reception section 114 among information stored in the start time information storage section 124. Then, the remaining amount difference calculation section 115 calculates a difference between the read entering time remaining battery amount value and the end time remaining battery amount value indicated by the data received from the end time data reception section 114 (S202). Then, the remaining amount difference calculation section 115 transmits data indicating a value of the difference between the remaining battery amounts to the supply fee calculation section 117.

On the other hand, upon receiving data indicating the reception time of the end time data and the onboard device ID of the ITS onboard device included in the end time data from the end time data reception section 114, the elapsed time calculation section 116 of the usage fee calculation device 110 reads information about the entering time stored in association with the onboard device ID of the ITS onboard device indicated by the data. Then, the elapsed time calculation section 116 calculates an elapsed time from the read entering time to the reception time of the end time data indicated by the data received from the end time data reception section 114 (S203). Then, the elapsed time calculation section 116 transmits data indicating the elapsed time to the time fee calculation section 118.

The supply fee calculation section 117 of the usage fee calculation device 110 receives the data indicating the reception time of the end time data and the onboard device ID of the ITS onboard device included in the end time data from the end time data reception section 114. Then, upon receiving the data indicating the value of the difference between the remaining battery amounts from the remaining amount difference calculation section 115, the supply fee calculation section 117 reads information about the entering time stored in association with the onboard device ID included in the data received from the end time data reception section 114 among information stored in the start time information storage section 124. Then, the supply fee calculation section 117 reads information about a unit price for electric charging stored in association with the day of the week and the time slot corresponding to a time from the entering time read from the start time information storage section 124 to the reception time indicated by data received from the end time data reception section 114 among information stored in the unit price information storage section 125. Then, the supply fee calculation section 117 calculates a fee for an amount of electric charge of the electric vehicle by multiplying the value of the difference between the remaining battery amounts indicated by the data received from the remaining amount difference calculation section 115 by the unit price for the electric charging read from the unit price information storage section 125 (S204). Then, the supply fee calculation section 117 transmits data indicating an electric charging fee to the usage fee calculation section 119.

The time fee calculation section 118 of the usage fee calculation device 110 receives the data indicating the reception time of the end time data and the onboard device ID of the ITS onboard device included in the end time data from the end time data reception section 114. Then, upon receiving the data indicating the elapsed time from the elapsed time calculation section 116, the time fee calculation section 118 reads the information about the entering time stored in association with the onboard device ID included in the data received from the end time data reception section 114 among the information stored in the start time information storage section 124. Then, the time fee calculation section 118 reads the information about the unit price per time stored in association with the day of the week and the time slot including a time period from the entering time read from the start time information storage section 124 to the reception time indicated by the data received from the end data reception section 114 among the information stored in the unit price information storage section 125.

Then, the time fee calculation section 118 calculates a fee for the time of use of the parking lot P by the electric vehicle by multiplying the elapsed time indicated by the data received from the elapsed time calculation section 116 by the unit price per time read from the unit price information storage section 125 (S205). The time fee calculation section 118 transmits data indicating a time fee to the usage fee calculation section 119.

Upon receiving the data indicating the electric charging fee from the supply fee calculation section 117 and the data indicating the time fee from the time fee calculation section 118, the usage fee calculation section 119 of the usage fee calculation device 110 calculates the usage fee of the parking lot P based on the electric charging fee indicated by the data received from the supply fee calculation section 117 and the time fee indicated by the data calculated by the time fee calculation section 118 (S205). For example, the usage fee calculation section 119 adds the electric charging fee, the time fee, and a predetermined basic fee and sets the addition result as the usage fee of the parking lot P. Then, when data representing information indicating that electronic payment is performed is not received from the end time data reception section 114 (S206: Yes), the usage fee calculation section 119 transmits data indicating the calculated usage fee to the usage fee data transmission section 120. On the other hand, upon receiving the data representing the information indicating that electronic payment is performed from the end time data reception section 114 (S206: No), the usage fee calculation section 119 transmits data indicating the calculated usage fee to the electronic payment section 123.

Upon receiving the data indicating the usage fee from the usage fee calculation section 119, the usage fee data transmission section 120 of the usage fee calculation device 110 transmits the data to the automatic fare adjustment machine 160 (S207). Upon receiving the data indicating the usage fee from the usage fee calculation device 110, the automatic fare adjustment machine 160 awaits payment of an amount of money corresponding to the usage fee indicated by the data. Then, when the amount of money corresponding to the usage fee is paid, the automatic fare adjustment machine 160 transmits data indicating that settlement has been completed to the usage fee calculation device 110. On the other hand, when the amount of money corresponding to the usage fee is not paid, the automatic fare adjustment machine continues in a state in which the payment is awaited. In this case, the gate bar 171 of the crossing gate 170 remains down. That is, it is difficult for the electric vehicle to leave the parking lot P before the payment of the usage fee is completed.

Upon receiving the data indicating that the settlement has been completed from the automatic fare adjustment machine 160 (S208: Yes), the settlement completion notification data reception section 121 of the usage fee calculation device 110 transmits the data to the leaving restriction control section 122.

Upon receiving the data indicating that the settlement has been completed from the settlement completion notification data reception section 121, the leaving restriction control section 122 of the usage fee calculation device 110 controls the crossing gate 170 to release the restriction from leaving imposed on the electric vehicle by the crossing gate 170 (S210). Thereby, the electric vehicle can leave the parking lot P.

On the other hand, upon receiving the data indicating the usage fee from the usage fee calculation section 119, the electronic payment section 123 of the usage fee calculation device 110 performs an electronic payment process with the payment server 180 to electronically pay the usage fee indicated by the data (S209). Then, when the electronic payment is completed, the electronic payment section 123 transmits data indicating that the electronic payment is completed to the leaving restriction control section 122.

Upon receiving the data indicating that the electronic payment has been completed from the electronic payment section 123, the leaving restriction control section 122 controls the crossing gate 170 to release the restriction from leaving imposed on the electric vehicle by the crossing gate 170 (S210). Thereby, the electric vehicle can leave the parking lot P.

As described above, the accounting system 100 can be operated without significantly upgrading an existing automatic fare adjustment machine to charge an electric charging fee of the electric vehicle along with a parking fee in an electric charging facility using the parking lot P. In addition, the accounting system 100 can be operated without botherations such that a user should hold and handle parking tickets. Further, the accounting system 100 can significantly reduce the possibility of occurrence of a congestion of vehicles around the entry/exit of the parking lot P.

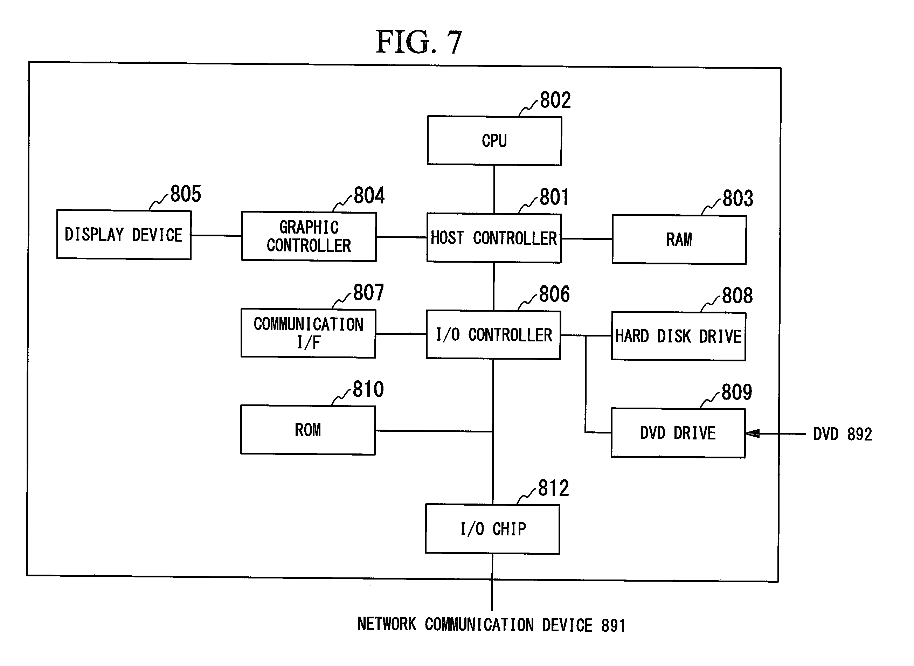

Fig. 7 is a diagram illustrating an example of a hardware configuration when the usage fee calculation device 110 is configured of an electronic information processing device such as a computer. The usage fee calculation device 110 includes a CPU (central processing unit) peripheral section, an I/O (input/output) section, and a legacy I/O (input/output) section. The CPU peripheral section includes a CPU 802, a RAM (random access memory) 803, a graphic controller 804, and a display device 805 mutually connected by a host controller 801. The I/O section includes a communication I/F (interface) 807, a hard disk drive 808, and a DVD (Digital Versatile Disc) drive 809 connected by an I/O (input/output) controller 806 to the host controller 801. The legacy I/O section includes a ROM (read only memory) 810 and an I/O (input/output) chip 812 connected to the I/O controller 806.

The host controller 801 is connected to the RAM 803, the CPU 802, which accesses the RAM 803 at a high transmission rate, and the graphic controller 804. The CPU 802 operates based on programs stored in the ROM 810 and the RAM 803 to control the respective sections. The graphic controller 804 acquires image data generated by the CPU 802 or the like on a frame buffer provided in the RAM 803 and displays the image data on the display device 805. Alternatively, the graphic controller 804 may internally include a frame buffer for storing the image data generated by the CPU 802 or the like.

The I/O controller 806 connects the host controller 801 to the hard disk drive 808, the communication I/F 807, and the DVD drive 809 which are relatively high-speed I/O (input/output) devices. The hard disk drive 808 stores programs and data used by the CPU 802. The communication I/F 807 is connected to a network communication device 891 to transmit and receive programs or data. The DVD drive 809 reads programs or data from the DVD 892 and provides the read programs or data to the hard disk drive 808 and the communication I/F 807 via the RAM 803.

The I/O controller 806 is connected to the ROM 810 and a relatively low-speed I/O (input/output) device of the I/O chip 812. The ROM 810 stores a boot program to be executed when the usage fee calculation device 110 starts up, programs dependent on the hardware of the usage fee calculation device 110, or the like. The I/O chip 812 connects various I/O (input/output) devices via a parallel port, a serial port, a keyboard port, a mouse port, and so on.

The programs to be executed by the CPU 802 are stored in the DVD 892 or a recording medium such as an IC (integrated circuit) card and provided to users. The programs stored in the recording medium may or may not be compressed. The programs are installed from the recording medium onto the hard disk drive 808, read to the RAM 803, and executed by the CPU 802. The programs executed by the CPU 802 cause the usage fee calculation device 110 to function as the start time data reception section 111, the full/empty determination section 112, the entering restriction control section 113, the end time data reception section 114, the remaining amount difference calculation section 115, the elapsed time calculation section 116, the supply fee calculation section 117, the time fee calculation section 118, the usage fee calculation section 119, the usage fee data transmission section 120, the settlement completion notification data reception section 121, the leaving restriction control section 122, the electronic payment section 123, the start time information storage section 124, and the unit price information storage section 125 described in relation to Figs. 1 to 6.

The programs described above may be stored in an external storage medium. As the storage medium, in addition to the DVD 892, an optical recording medium such as a PD (phase disk), a magneto-optical recording medium such as a MD (MiniDisk), a tape medium, a semiconductor memory such as an IC card, and so on can be used. In addition, the program may be provided as a program via a network using a storage medium such as a hard disk or a RAM provided in a server system connected to a dedicated communication network or the Internet as a recording medium.

While the embodiment of the present invention has been described, the technical scope of the invention is not limited to the above-described embodiment. It is apparent to persons skilled in the art that various alterations and improvements can be added to the above-described embodiment. It is also apparent from the scope of the claims that embodiments to which such alterations or improvements are added can be included in the technical scope of the invention.

### [Industrial Applicability]

According to this embodiment, in an electric charging facility using a parking lot, an operation is possible without significantly upgrading an existing automatic fare adjustment machine to charge an electric charging fee of an electric vehicle along with a parking fee. In addition, according to this embodiment, the operation is possible without causing a user to use a parking ticket. Further, the likelihood of a congestion of vehicles occurring around the entry/exit of the parking lot can be significantly reduced.

### [Reference Signs List]

- 100: Accounting system
- 110: Usage fee calculation device
- 111: Start time data reception section
- 112: Full/empty determination section
- 113: Entering restriction control section
- 114: End time data reception section
- 115: Remaining amount difference calculation section
- 116: Elapsed time calculation section
- 117: Supply fee calculation section
- 118: Time fee calculation section
- 119: Usage fee calculation section
- 120: Usage fee data transmission section
- 121: Settlement completion notification data reception section
- 122: Leaving restriction control section
- 123: Electronic payment section
- 124: Start time information storage section
- 125: Unit price information storage section
- 130: DSRC roadside wireless device
- 140: Crossing gate
- 150: DSRC roadside wireless device
- 160: Automatic fare adjustment machine
- 170: Crossing gate
- 180: Payment server
- 801: Host controller
- 802: CPU
- 803: RAM
- 804: Graphic controller
- 805: Display device
- 806: I/O controller
- 807: Communication I/F
- 808: Hard disk drive
- 809: DVD drive
- 810: ROM
- 812: I/O chip
- 891: Network communication device
- 892: DVD
- C: Electric charging device
- I: Communication line
- P: Parking lot
- R: Communication area
- S: Parking space

## Claims

1. An accounting system which charges a usage fee to a user of a parking lot in the parking lot in which an energy supply facility for a vehicle is provided, comprising:
a wireless communication device which performs wireless communication with an onboard device of the vehicle; and
a usage fee calculation device which calculates a usage fee of the parking lot based on data received by the wireless communication device from the onboard device,
wherein the usage fee calculation device includes:
a supply fee calculation section which calculates a fee for an amount of energy supply by the supply facility for the vehicle by multiplying a difference between a start time remaining amount value of energy of the vehicle included in start time data received by the wireless communication device from the onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of the end time data by a unit price per unit time for using the parking lot; and
a usage fee calculation section which calculates the usage fee of the parking lot based on the fee calculated by the supply fee calculation section and the fee calculated by the time fee calculation section.

2. The accounting system according to claim 1,
wherein the usage fee calculation device further includes:
a remaining amount difference calculation section which calculates a difference between the start time remaining amount value of energy of the vehicle included in the start time data and the entering time remaining amount value of energy of the vehicle included in the end time data, and
wherein the supply fee calculation section calculates a fee for an amount of energy supply for the vehicle by the supply facility according to the difference between the remaining amount values of energy of the vehicle calculated by the remaining amount difference calculation section.

3. The accounting system according to claim 1 or 2,
wherein the usage fee calculation device further includes:
an elapsed time calculation section which calculates the elapsed time from the reception time of the start time data to the reception time of the end time data, and
wherein the time fee calculation device calculates the fee for the time of the use of the parking lot by the vehicle according to the time calculated by the elapsed time calculation section.

4. The accounting system according to any one of claims 1 to 3, wherein the supply fee calculation section changes the unit price for the supply according to a time division including time period from the reception time of the start time data to the reception time of the end time data.

5. The accounting system according to any one of claims 1 to 4, wherein the time fee calculation section changes the unit price per time according to a time division including a time period from the reception time of the start time data to the reception time of the end time data.

6. The accounting system according to any one of claims 1 to 5, further comprising:
a restriction device which restricts the vehicle from leaving the parking lot,
wherein the usage fee calculation device further includes a leaving restriction control section which controls the restriction device to release restriction from leaving imposed on the vehicle by the restriction device when the usage fee calculated by the usage fee calculation section has been adjusted.

7. The accounting system according to claim 6, further comprising:
a fee settlement device which performs settlement on the usage fee of the parking lot,
wherein, when the fee settlement device has performed the settlement on the usage fee of the parking lot and the usage fee calculated by the usage fee calculation section has been adjusted, the leaving restriction control section controls the restriction device to release the restriction from leaving imposed on the vehicle by the restriction device.

8. The accounting system according to claim 6 or 7, wherein, when payment information for adjusting the usage fee is included in the end time data and the usage fee calculated by the usage fee calculation section has been electronically paid using the payment information, the leaving restriction control section controls the restriction device to release the restriction from leaving imposed on the vehicle by the restriction device.

9. The accounting system according to claim 8,
wherein the usage fee calculation device further includes:
an electronic payment section which electronically pays the usage fee calculated by the usage fee calculation section using the payment information when the payment information for adjusting the usage fee is included in the end time data, and
wherein, when the electronic payment section has made electronic payment, the leaving restriction control section controls the restriction device to release the restriction from leaving imposed on the vehicle by the restriction device.

10. A usage fee calculation device which calculates a usage fee of a parking lot, comprising:
a supply fee calculation section which calculates a fee for an amount of energy supply by the supply facility for a vehicle by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of the end time data by a unit price per unit time for using the parking lot; and
a usage fee calculation section which calculates the usage fee of the parking lot based on the fee calculated by the supply fee calculation section and the fee calculated by the time fee calculation section.

11. A control method of controlling a usage fee calculation device which calculates a usage fee of a parking lot, comprising:
a supply fee calculation step of calculating a fee for an amount of energy supply by the supply facility for a vehicle by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy;
a time fee calculation step of calculating a fee for a time of the use of the parking lot by the vehicle by multiplying an elapsed time from a reception time of the start time data to a reception time of the end time data by a unit price per unit time for using the parking lot; and
a usage fee calculation step of calculating the usage fee of the parking lot based on the fee calculated in the supply fee calculation step and the fee calculated in the time fee calculation step.

12. A program for use in a usage fee calculation device, which calculates a usage fee of a parking lot, for causing the usage fee calculation device to function as:
a supply fee calculation section which calculates a fee for an amount of energy supply by the supply facility for a vehicle by multiplying a difference between a start time remaining amount value of energy of the vehicle included in start time data received by a wireless communication device from an onboard device of the vehicle when use of the parking lot by the vehicle starts and an end time remaining amount value of energy of the vehicle included in end time data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of the end time data by a unit price per unit time for using the parking lot; and
a usage fee calculation section which calculates the usage fee of the parking lot based on the fee calculated by the supply fee calculation section and the fee calculated by the time fee calculation section.

## Amended claims

### Amended claims under Art. 19.1 PCT

1. An accounting system which charges a usage fee to a user of a parking lot in the parking lot in which an energy supply facility for a vehicle is provided, comprising:
a wireless communication device which performs wireless communication with an onboard device of the vehicle; and
a usage fee calculation device which calculates a usage fee of the parking lot based on data received by the wireless communication device from the onboard device,
wherein the usage fee calculation device includes:
a supply fee calculation section which calculates a fee for an amount of energy supply by the supply facility for the vehicle by multiplying a difference between a remaining amount value of energy of the vehicle included in start time data received by the wireless communication device from the onboard device of the vehicle when use of the parking lot by the vehicle starts and an end time remaining amount value of energy of the vehicle included in data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of end time data by a unit price per unit time for using the parking lot; and
a usage fee calculation section which calculates the usage fee of the parking lot based on the fee calculated by the supply fee calculation section and the fee calculated by the time fee calculation section.

2. The accounting system according to claim 1,
wherein the usage fee calculation device further includes:
a remaining amount difference calculation section which calculates a difference between the remaining amount value of energy of the vehicle included in the start time data and the remaining amount value of energy of the vehicle included in the end time data, and
wherein the supply fee calculation section calculates a fee for an amount of energy supply for the vehicle by the supply facility according to the difference between the remaining amount values of energy of the vehicle calculated by the remaining amount difference calculation section.

3. The accounting system according to claim 1 or 2,
wherein the usage fee calculation device further includes:
an elapsed time calculation section which calculates the elapsed time from the reception time of the start time data to the reception time of the end time data, and
wherein the time fee calculation device calculates the fee for the time of the use of the parking lot by the vehicle according to the time calculated by the elapsed time calculation section.

4. The accounting system according to any one of claims 1 to 3, wherein the supply fee calculation section changes the unit price for the supply according to a time division including time period from the reception time of the start time data to the reception time of the end time data.

5. The accounting system according to any one of claims 1 to 4, wherein the time fee calculation section changes the unit price per time according to a time division including a time period from the reception time of the start time data to the reception time of the end time data.

6. The accounting system according to any one of claims 1 to 5, further comprising:
a restriction device which restricts the vehicle from leaving the parking lot,
wherein the usage fee calculation device further includes a leaving restriction control section which controls the restriction device to release restriction from leaving imposed on the vehicle by the restriction device when the usage fee calculated by the usage fee calculation section has been adjusted.

7. The accounting system according to claim 6, further comprising:
a fee settlement device which performs settlement on the usage fee of the parking lot,
wherein, when the fee settlement device has performed the settlement on the usage fee of the parking lot and the usage fee calculated by the usage fee calculation section has been adjusted, the leaving restriction control section controls the restriction device to release the restriction from leaving imposed on the vehicle by the restriction device.

8. The accounting system according to claim 6 or 7, wherein, when payment information for adjusting the usage fee is included in the end time data and the usage fee calculated by the usage fee calculation section has been electronically paid using the payment information, the leaving restriction control section controls the restriction device to release the restriction from leaving imposed on the vehicle by the restriction device.

9. The accounting system according to claim 8,
wherein the usage fee calculation device further includes:
an electronic payment section which electronically pays the usage fee calculated by the usage fee calculation section using the payment information when the payment information for adjusting the usage fee is included in the end time data, and
wherein, when the electronic payment section has made electronic payment, the leaving restriction control section controls the restriction device to release the restriction from leaving imposed on the vehicle by the restriction device.

10. A usage fee calculation device which calculates a usage fee of a parking lot, comprising:
a supply fee calculation section which calculates a fee for an amount of energy supply by a supply facility for a vehicle by multiplying a difference between a remaining amount value of energy of the vehicle included in start time data received by a wireless communication device from an onboard device of the vehicle when use of the parking lot by the vehicle starts and a remaining amount value of energy of the vehicle included in end time data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of the end time data by a unit price per unit time for using the parking lot; and
a usage fee calculation section which calculates the usage fee of the parking lot based on the fee calculated by the supply fee calculation section and the fee calculated by the time fee calculation section.

11. A control method of controlling a usage fee calculation device which calculates a usage fee of a parking lot, comprising:
a supply fee calculation step of calculating a fee for an amount of energy supply by a supply facility for a vehicle by multiplying a difference between a remaining amount value of energy of the vehicle included in start time data received by a wireless communication device from an onboard device of the vehicle when use of the parking lot by the vehicle starts and a remaining amount value of energy of the vehicle included in end time data received by the wireless communication device from the onboard device of the vehicle when the use of the parking lot by the vehicle ends by a unit price for supply per unit amount of energy;
a time fee calculation step of calculating a fee for a time of the use of the parking lot by the vehicle by multiplying an elapsed time from a reception time of the start time data to a reception time of the end time data by a unit price per unit time for using the parking lot; and
a usage fee calculation step of calculating the usage fee of the parking lot based on the fee calculated in the supply fee calculation step and the fee calculated in the time fee calculation step.

12. A program for use in a usage fee calculation device, which calculates a usage fee of a parking lot, for causing the usage fee calculation device to function as:
a supply fee calculation section which calculates a fee for an amount of energy supply by a supply facility for a vehicle by multiplying a difference between a remaining amount value of energy of the vehicle included in start time data received by a wireless communication device from an onboard device of the vehicle when use of the parking lot by the vehicle starts and a remaining amount value of energy of the vehicle included in end time data received by the wireless communication device from the onboard device of the vehicle when the use of the parking lot by the vehicle ends by a unit price for supply per unit amount of energy;
a time fee calculation section which calculates a fee for a time of the use of the parking lot by the vehicle by multiplying an elapsed time from a reception time of the start time data to a reception time of the end time data by a unit price per unit time for using the parking lot; and
a usage fee calculation section which calculates the usage fee of the parking lot based on the fee calculated by the supply fee calculation section and the fee calculated by the time fee calculation section.
